# EUROPEAN PATENT APPLICATION

(11) **EP 1 040 937 A1**
(43) Date of publication of application: **04.10.2000**
(21) Application number: 98961393.0
(22) Date of filing: 17.12.1998
(51) Int. Cl.: B41M 5/26, G11B 7/24

(54) **WRITE ONCE OPTICAL INFORMATION RECORDING MEDIUM**

(30) Priority: 17.12.1997 JP 34811897; 17.12.1997 JP 34811997; 10.06.1998 JP 16256198
(71) Applicant: Asahi Kasei Kogyo Kabushiki Kaisha, Osaka-shi, Osaka 530-8205 (JP)
(72) Inventor: FURUYA, Kazuyuki, Fuji-shi, Shizuoka 416-0949 (JP); SUZUKI, Masaru, Fuji-shi, Shizuoka 416-0939 (JP)
(74) Representative: Weber, Thomas, Dr.Dipl.-Chem.
(86) International application number: JP9805717
(87) International publication number: WO9930908

(57) **Abstract**

The present invention has a subject of providing a write-once type optical information recording medium with low dependence on the wavelength of a recording laser beam and suitable to a case in which the recording system is mark edge recording.

The composition of the phase change type recording layer (2) is defined within a range surrounded by four points of A (0.475, 0.05, 0.475), B (0.665, 0.05, 0.285), C (0.60, 0.40, 0) and D (0.40, 0.60, 0) in the triangular diagram of Fig. 1. A compound layer (3) is disposed just above or just below the recording layer (2). The compound layer (3) comprises at least one compound selected from the group consisting of PbSe, PbTe, SnSe, SnTe, Bi₂Te₃ and Sb₂Te₃ as the main ingredient. The reflection layer (4) comprises a material having a heat conductivity of 50 W/m·K or higher.

## Description

### TECHNICAL FIELD

The present invention concerns a write-once type optical information recording medium having a phase-change type recording layer.

### BACKGROUND ART

As an optical information recording medium for recording and reading data by irradiation of a laser beam, a write-once type optical disc capable of recording only for once and a rewritable type optical disc capable of erasing recorded information and re-recording have been known.

As the recording principle of the write-once type optical disc, there have been proposed, for example, (a) a method of forming holes in a recording layer, (b) a method of thermally deforming a recording layer, (c) a method of alloying or condensing metals, (d) a method of phase changing a recording layer and (e) a method of thermally color development of an organic dye.

CD-R (Compact Disc Recordable: write-once type CD) recently used frequently as a write-once type optical disc is mainly based on the recording principle (e) above using an organic dye since it is required that the reflectivity of the disc is 65% or more. This is because the recording principles other than (e) can not satisfy the two factors in that (1) the recording layer has appropriate values of an optical constant and (2) recording is possible while having a high reflectivity together.

Further, DVD-R (Digital Video Disc Recordable: write-once type DVD) having a higher recording density than that of CD-R has also been put to actual products in recent years. DVD-R is still based on mainly the recording principle (e) while it is not necessary to make the reflectivity of the disc so high as that for the CD-R. The reason is as described below. In DVD-R, the recording method is a mark edge recording (also referred to as "pit edge recording", and recording is conducted at a high density. Therefore, the edge of the recording mark (also referred to as "recording pit") has to be formed at a predetermined position with an exact shape and clearly. It has been difficult to control such mark edge by the recording principle other than (e).

However, the recording principle (e) described above involves a problem that the dependence on the wavelength of the recording laser beam is high and recording and reading are no more possible if the wavelength changes even only for several tens nm. Further, the wavelength of the laser beam capable of high density recording to the write-once type optical disc adopted the recording principle (e) is different from the wave length for recording to existent optical discs. Therefore, there is also a problem that a disc drive can not be used in common with existent products (that is, poor compatibility).

On the other hand, various write-once type optical discs utilizing the recording principle (d) have also been put to actual products. In this case, a material occurring phase change between crystal and amorphousness due to the difference of the intensity of irradiated laser beams is used. In the recording principle, the dependence on the wavelength of the laser beam for the recording is lower than that in the recording principle (e).

As a structure of the optical disc of this type, a structure in which a metal reflection layer is disposed on a recording layer has been proposed (refer to Japanese Unexamined Patent Publication Nos. 154341/1987 and 176185/1988). In the proposals, a reflection layer comprising Sb, Te or Bi as a main ingredient is disposed on a recording layer to increase the sensitivity and improve an optical contrast.

However, the reflection layer materials mentioned in the proposals are suitable where the recording method is a mark position recording (also referred to as "pit position recording"). In the mark position recording, different from the mark edge recording, it is not necessary to precisely control the edge of the recording mark. Then, since the edge controllability for the recording mark is not improved even if a reflection layer comprising Sb, Te or Bi as the main ingredient is disposed on the recording layer, such proposals are not suitable where the recording method is a mark edge recording.

Japanese Unexamined Patent Publication No. 164937/1985 proposes to constitute a recording layer of an optical disc into a three layered structure having a light absorption layer between two phase change layers in order to increase the recording sensitivity. The phase change layer are constituted with an elemental Se or Se compound or Se alloy. The absorption layer is constituted with an elemental Bi, elemental Te or an alloy thereof. However, this proposal is not also suitable where the recording method is mark edge recording.

Japanese Unexamined Patent Publication No. 28045/1985 discloses an information recording medium having a recording layer of a two layered structure. A first layer constituting the recording layer comprises chalcogenide glass (for example, Sb-Se) and a second layer comprises a low melting point metal (for example, Te, Bi Sb and In) or an alloy thereof (for example, Bi-Te). The recording principle of the medium is alloying described in (C) above.

Japanese Unexamined Patent Publication No. 66668/1997 discloses an optical disc in which the recording layer has a three layered structure. The recording layer is constituted with an Sb-Se series thin film, a Bi-Te series thin film and an Sb-Se series thin film in this order from the side of a substrate. The recording principle of this medium is alloying in (C) above.

Japanese Unexamined Patent Publication No. 342629/1993 discloses an information recording medium having an auxiliary layer comprising an elemental Te, Se alloy or Te-Ge-Sb with a higher Te content than that of the recording layer, in contact with the recording layer comprising a Te-Ge-Sb series alloy. In the medium, recording is conducted by phase changing the recording layer from crystal to amorphousness. Therefore, for conducting stable recording from the first time, an initializing process of making the recording layer into a uniform crystal has been applied to the medium before supply. The auxiliary layer is disposed for simplifying the initialization process. Further, the medium is a rewritable type.

The present invention has a subject of improving the edge controllability of a recording mark in write-once type optical information recording medium having a phase-change type recording layer with less dependence on the wavelength of a recording laser beam. When the edge of the recording mark is controlled precisely, the jitter value of a readout light is decreased where the recording method is mark edge recording. Thus, a write-once type optical information recording medium suitable where the recording method is a mark edge recording is provided.

### DISCLOSURE OF THE INVENTION

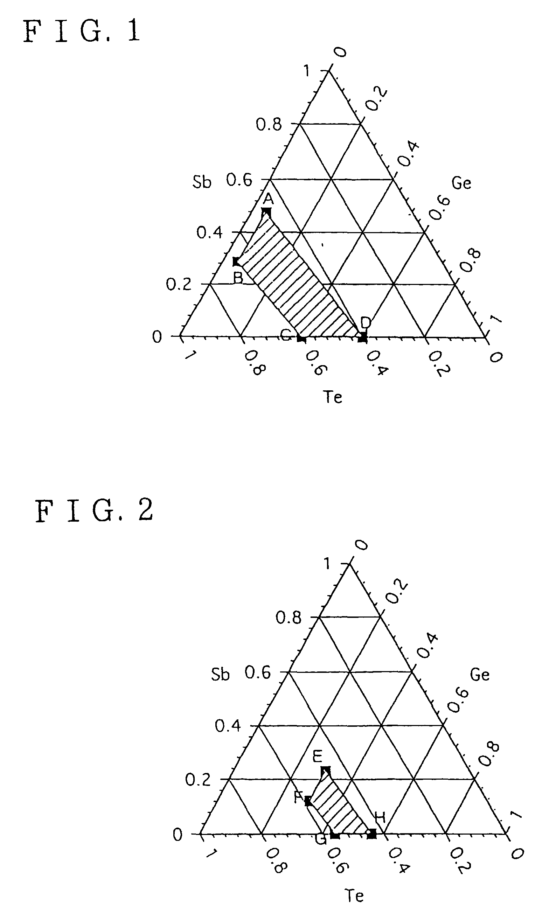

For solving the foregoing subject, the present invention provides a write-once type optical information recording medium having a recording layer for recording information by phase change from amorphousness to crystal at least on one surface of a transparent substrate, wherein the recording layer comprises a Te-Ge-Sb series alloy (other elements may be incorporated in addition to Te, Ge and Sb) or a Te-Ge series alloy (other elements may be incorporated in addition to Te and Ge), in which the composition thereof is within a region surrounded by four points of A (0.475, 0.05, 0.475), B (0.665, 0.05, 0.285), C (0.60, 0.40, 0), D (0.40, 0.60, 0) in a triangular diagram, shown in Fig. 1, showing the composition of three ingredients of Te and Ge and Sb by a coordinate (Te, Ge, Sb), and which has a compound layer containing at least one compound selected from the group consisting of PbSe, PbTe, SnSe, SnTe, Bi₂Te₃ and Sb₂Te₃ as the main ingredient just above or just below the recording layer.

The composition at the point A is Te47.5Ge5Sb47.5, the composition at the point B is Te66.5Ge5Sb28.5, the composition at the point C is Te60Ge40 and the composition at the point D is Te40Ge60.

In the recording medium of the present invention, since the composition of the recording layer is within the range described above and has the compound layer containing the compound specified above as the main ingredient just above and just below the recording layer, stability of a recording mark to a reading beam is improved and the jitter characteristic upon conducting high density recording by mark edge recording is favorable.

An alloy comprising at least two elements among the three elements of Te, Ge and Sb have high crystallizing rate (transfer rate from amorphousness to crystal), they have been used so far as the material for the recording layer of an optical information recording medium.

However, when the composition of the recording layer is outside of a line connecting the point A and point B in the triangular diagram of Fig. 1 (that is , if the Ge content is less than 5 atomic%), the crystallizing temperature is lowered and a portion not formed with a recording mark (the portion is "not recorded portion") tends to be crystallized by the reading beam. As a result, the boundary between the recording mark and the not recorded portion becomes unclear to possibly deteriorate the recording mark.

Further, when the composition of the recording layer is outside of a line connecting the point B and the point C and outside of a line connecting the point D and the point A in the triangular diagram of Fig. 1, the jitter characteristic is worsened.

In view of the foregoings, the composition of the recording layer is defined in the range described above in the recording medium according to the present invention.

When the composition of the recording layer is a composition is within a range surrounded by the points A, B, C and D but near the line connecting the point A and point B in the triangular diagram of Fig. 1 (that is a composition with a relatively low Ge content although being 5 atomic% or more), the difference of the optical constant between the amorphous state and the crystalline state is reduced. As a result, the amplitude of a readout signal is decreased and this is not favorable in view of the signal quality.

A more preferred range for the composition of the recording layer is a range in which the coordinate (Te, Ge, Sb) is at E (0.47, 0.30, 0.23), F (0.58, 0.30, 0.12), G (0.56, 0.44, 0) and H (0.44, 0.56, 0), respectively, in Fig. 2 which is a triangular diagram like Fig. 1. The composition at the point E is Te47Ge30Sb23, the composition at the point F is Te58Ge30Sb12 and the composition at the point G is Te56Ge44 and the composition at the point H is Te44Ge56.

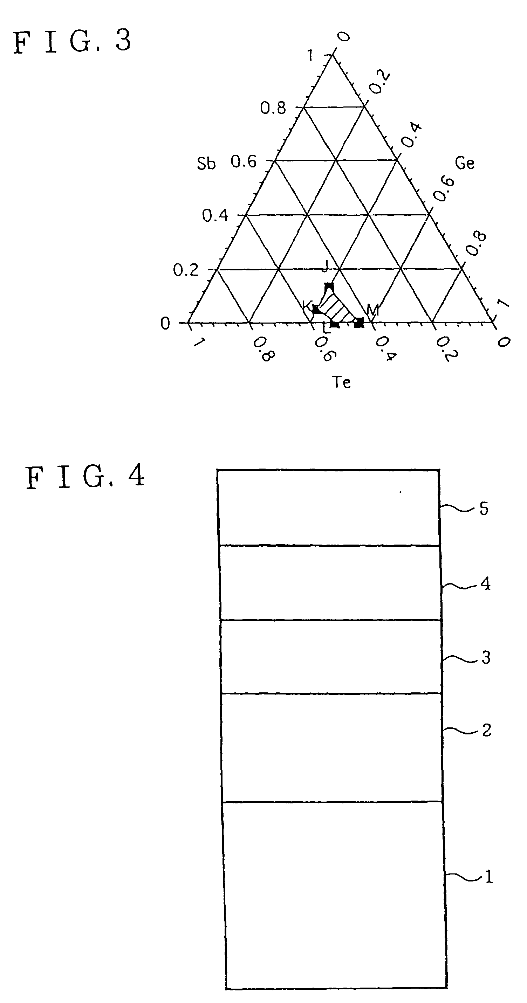

A more preferred range for the composition of the recording layer is a range in which the coordinate (Te, Ge, Sb) is surrounded by four points at J (0.47, 0.40, 0.13), K (0.55, 0.40, 0.05), L (0.52, 0.48, 0) and M (0.44, 0.56, 0) respectively in Fig. 3 which is a triangular diagram like Fig. 1. The composition at the point J is Te47Ge40Sb13, the composition at the point K is Te55Ge40Sb5 and the composition at the point L is Te52Ge48 and the composition at the point M is Te44Ge56.

The compound layer that the recording medium of the present invention has comprises at least one compound selected from the group consisting of PbSe, PbTe, SnSe, SnTe, Bi₂Te₃ and Sb₂Te₃ as the main ingredient. The compound layer may be formed with one of the compounds or may be in a mixed crystal state in admixture of two or more of them. With a view point of storage life of a disc, the main ingredient of the compound layer is preferably SnTe among the compounds described above.

The compound layer comprises the compound specified above as the main ingredient and can contain other materials than described above. In this case, the content of the specified compound in the entire material constituting the compound layer is 50 vol% or more. If the content of the specified compound is less than 50 vol%, the recording layer is not favorably crystallized to possibly worsen the jitter characteristic of the readout light. The content of the specified compound in the compound layer is preferably 70 vol% or more.

In a case where the recording medium of the present invention has a structure having a reflection layer for reflecting a light transmitted through the recording layer, the reflection layer is preferably constituted with a material having a heat conductivity of 50 W/m·K or higher. This can control the length of a recording mark by mark edge recording accurately.

The material having the heat conductivity of 50 W/m·K or higher can include a metal selected from the group consisting of Al, Cr, Ni, Au, Hf, Pd, Ta, Co, Mo, W and Ti, or an alloy of such metals. Among the materials described above, Al-Ti alloy, Al-Cr alloy, Al-Ta alloy, Al-Pd alloy, Ti-Al alloy, Ti-V alloy and the like are preferred as the material for the reflection layer in various points of view. The compositional ratio of the alloys is set in accordance with required characteristics.

A synthetic resin layer comprising a UV-ray curable resin (for example, urethane, acrylic, silicon or polyester series) or hot-melt type adhesive is preferably disposed on the upper surface of the reflection layer (the surface opposite to the substrate) for protecting and reinforcing the reflection layer.

An example of a layered structure for the recording medium of the present invention is shown in Fig. 4.

In this example, a recording layer 2, a compound layer 3 and a reflection layer 4 are laminated successively on a transparent substrate 1 and a synthetic resin layer 5 are formed on the reflection layer 4. The thickness of each of the layers is set in accordance with required characteristics and, in a usual optical disc, the thickness of the recording layer 2 is preferably within a range of 5 nm or more and less than 50 nm. The thickness of the compound layer 3 is preferably within a range of 1 nm or more and less than 50 nm. The thickness of the reflection layer 4 is preferably within a range of 10 nm or more and less than 300 nm.

If the thickness of the recording layer 2 is less than 5 nm, it is not preferred since the optical contrast is extremely decreased. Further, if the thickness of the recording layer 2 is 50 nm or more, it is not preferred since the jitter characteristic is worsened by the diffusion of heat in a plane of the recording layer. A more preferred range for the thickness of the recording layer 2 is 10 nm or more and less than 50 nm.

The thickness of the compound layer 3 may be extremely small, providing that the compound layer 3 is formed so as to be in uniform contact with the entire surface of the recording layer 2. However, if the thickness of the compound layer 3 is less than 1 nm, the layer may possibly be in an island structure not to be in uniform contact with the entire surface of the recording layer 2.

As the thickness of the compound layer 3 increases, more heat is accumulated in the recording layer 2. The recording mark tends to be degraded by the reading beam under the effect of the heat. If the thickness of the compound layer 3 is 50 nm or more, the effect of the heat becomes remarkable.

With the view points described above, a more preferred range for the thickness of the compound layer 3 is 2 nm or more and less than 20 nm and, a further preferred range is 2 nm or more and less than 10 nm.

If the thickness of the reflection layer is less than 10 nm, it is not preferred since both of the function of reflecting light and the effect of dissipating heat (so-called heat sink effect) can not be obtained substantially. Further, as the thickness of the reflection layer 4 increases, the recording sensitivity is lowered. Low recording sensitivity is not preferred since this requires a high laser power upon recording. If the thickness of the reflection layer is 300 nm or more, the recording sensitivity is lowered remarkably.

With the view points described above, a more preferred range for the thickness of the reflecting layer 4 is 20 nm or more and less than 200 nm.

The thickness of the synthetic resin layer 5 is preferably within a range of 2 µm or more and less than 20 µm.

When the recording medium of the present invention has a structure with no reflection layer and the compound layer is formed just above the recording layer (in contact with the surface opposite to the substrate), a protection layer is disposed preferably on the compound layer. The material of the protection layer can include at least one member selected from oxides, carbides, nitrides, fluorides and sulfides of metals or semi-metals. They can include, specifically, oxides such as SiO₂, SiO, Ta₂O₅ and ZrO₂, carbides such as SiC and TiC, elemental carbon, nitrides such as Si₃N₄ and AlN, sulfides such as ZnS, Sms and SrS and fluorides such as MgF₂. One member selected from the materials or a mixture of a plurality of them may be preferably used as the material for the protection layer.

The structure with no reflection layer can be adopted, for example, where the compound layer is formed of a chemically stable material.

Referring to the method of manufacturing the recording medium according to the present invention, any of a sputtering method, vacuum deposition method, CVD method or PVD method can be adopted as a method for forming the recording layer and the compound layer, and the use of the sputtering method is preferred in view of the productivity and the operationability.

The deposition method of the compound layer by the sputtering method includes (1) a method of using a target made of a compound constituting the compound layer, (2) a co-sputtering method of providing targets comprising each of metal elements constituting the compound of the compound layer and discharging such targets individually, and (3) a method in a case of containing a compound of a metal element and a non-metal element as a material for constituting the compound layer, and the method is providing a target made of metal elements for constituting a compound, and adding a gas containing a non-metal element in a sputtering atmosphere, thereby forming the compound on a substrate.

Among the methods, the method (1) is preferred since this is excellent in productivity, controllability and film homogeneity. Further, in a case where the compound layer is formed as a mixed crystal film of a plurality of compounds, it is preferred to use a material comprising each of the compounds in admixture as a target.

As the substrate for the recording medium according to the present invention, a transparent substrate often used so far as a substrate for an optical disc can be used for instance. Particularly, use of a substrate made of polycarbonate, polymethylmethacrylate or glass having favorable optical characteristic, high mechanical strength and excellent dimensional stability is used preferably.

### BRIEF EXPLANATION OF DRAWINGS

Fig. 1 is a triangular diagram showing a composition for three ingredients of Te, Ge and Sb as a coordinate (Te, Ge, Sb), which shows the compositional range (range surrounded by four points A B C and D) of a recording layer of a recording medium according to the present invention.
Fig. 2 is a triangular diagram showing a composition for three ingredients of Te, Ge and Sb as a coordinate (Te, Ge, Sb), which shows a preferred range (range surrounded by four points E F G and H) as a composition for the recording layer of a recording medium according to the present invention.
Fig. 3 is a triangular diagram showing a composition for three ingredients of Te, Ge and Sb as a coordinate (Te, Ge, Sb), which shows a more preferred range (range surrounded with four points J K L and M) as a composition for the recording layer of a recording medium according to the present invention.
Fig. 4 is a drawing showing an example of a layered structure for a recording medium according to the present invention.

### BEST MODE FOR PRACTICING THE INVENTION

Embodiments of the present invention are to be explained.

### EXAMPLE 1

A write-once type optical disc of a layered structure shown in Fig. 4 was prepared. At first, on a clean polycarbonate substrate 1 formed with guide grooves (0.6 mm thickness, 0.74 µm track pitch, 0.37 µm groove width and 700 Å groove depth), a recording layer 2 of 25 nm thickness, a compound layer 3 of 5 nm thickness and reflection layer 4 of 40 nm thickness were successively deposited by a sputtering method. Then, after coating a UV-ray curable resin on the upper surface of the reflection layer 4, UV-rays were irradiated on the coated surface to cover the upper surface of the reflection layer with a synthetic resin layer 5.

The recording layer 2 was deposited by using a target comprising an Sb-Te-Ge alloy. The composition of the target was controlled such that the composition after the deposition was Sb17Te53Ge30. The compound layer 3 was deposited by using a target comprising PbTe. The reflection layer 4 was deposited by using a target comprising an AlTi alloy.

The recording layer of the prepared optical disc is in an amorphous state, and information recording to the optical disc is conducted by forming a recording mark in a crystalline state to the recording layer by the irradiation of a laser beam.

In this case, random signals of 8 - 16 modulation system with a shortest mark length of 0.4 µm were recorded by irradiating a multi-pulse laser at a laser power (7 - 8 mW), with a pulse width (20 to 25 nsec) and with optimized timing for pulse emission (delay time for the leading pulse of 2 to 5 nsec), while rotating the optical disc at a linear velocity of 6 m/sec.

The wavelength of the laser beam is 650 nm and the numeral aperture of an objective lens is 0.6 in an optical system used for recording and reading.

Jitter of the readout light of the optical disc was measured by the following method.

When a slice signal at a predetermined voltage is superposed on the readout signal waves to generate a plurality of pulse signals having rising points at intersections between both of them, the rising points of pulse signal agrees with the rising point of a pulse signal showing a reference clock if the edge of the recording mark is formed at an exact position. However, if the edge if displaced, a time difference is caused between the rising points. The time difference is measured for a number of pulse signals having the rising points at the intersections, and a standard deviation is calculated based on the distribution thereof. The value obtained by dividing the calculated value of the standard deviation with the period of the reference clock corresponds to the jitter.

The jitter is measured by the method described above by at first setting the voltage of the slice signal near the center of the amplitude of the readout signal. Then, measurement of the jitter by the method described above is repeated with varying the voltage for the slice signal. In this embodiment, the minimum value of the jitter thus measured is defined as (measured value of the jitter).

The measured value of the jitter is 8.01% and the jitter characteristic was favorable in this optical disc.

### EXAMPLE 2

A write-once type optical disc of a layered structure shown in Fig. 4 was prepared in the same manner as in Example 1. However, the compound layer 3 was deposited by using a target comprising SnTe. Other procedures than those described above are identical with those in Example 1 including the thickness of the compound layer 3.

After conducting recording to the optical disc thus prepared in the same manner as in Example 1, the jitter of the readout light was measured by the same method as in Example 1. The measured value of the jitter in this optical disc was 8.13% and the jitter characteristic was favorable.

### EXAMPLE 3

A write-once type optical disc of a layered structure shown in Fig. 4 was prepared in the same manner as in Example 1. However, a target comprising an Sb-Te-Ge alloy used for the deposition of the recording layer 2 was controlled for the composition such that the composition after the deposition was Sb10Te50Ge40. Other procedures than those described above are identical with those in Example 1 including the thickness of the recording layer 3.

After conducting recording to the optical disc thus prepared in the same manner as in Example 1, the jitter of the readout light was measured by the same method as in Example 1. The measured value of the jitter in this optical disc was 8.28% and the jitter characteristic was favorable.

### EXAMPLE 4

A write-once type optical disc of a layered structure shown in Fig. 4 was prepared in the same manner as in Example 1. However, a target comprising an Sb-Te-Ge alloy used for the deposition of the recording layer 2 was controlled for the composition such that the composition after the deposition was Sb27Te53Ge20. Other procedures than described above were identical with those in Example 1 including the thickness of the recording layer 2.

After conducting recording to the optical disc thus prepared in the same manner as in Example 1, the jitter of readout light was measured by the same method as in Example 1. The measured value of the jitter in this optical disc was 8.33% and the jitter characteristic was favorable.

### EXAMPLE 5

A write-once type optical disc of a layered structure shown in Fig. 4 was prepared in the same manner as in Example 1. However, a target used for the deposition of the recording layer 2 comprises an Te-Ge alloy and the composition was controlled for the composition such that the composition after the deposition was Te50Ge50. Other procedures than described above were identical with those in Example 1 including the thickness of the recording layer 2.

After conducting recording to the optical disc thus prepared in the same manner as in Example 1, the jitter of the readout light was measured by the same method as in Example 1. The measured value of the jitter was 8.50% and the jitter characteristic was favorable in this optical disc.

### EXAMPLE 6

A write-once type optical disc of a layered structure shown in Fig. 4 was prepared in the same manner as in Example 1. However, a target comprising an Sb-Te-Ge alloy used for the deposition of the recording layer 2 was controlled for the composition such that the composition after the deposition was Sb13Te47Ge40. The compound layer 3 was formed by using a target comprising SnTe. Other procedures than described above were identical with those in Example 1 including the thickness of the recording layer 2 and that of the compound layer 3.

After conducting recording to the optical disc thus prepared in the same manner as in Example 1, the jitter of readout light was measured by the same method as in Example 1. The measured value of the jitter in this optical disc was 7.55% and the jitter characteristic was favorable.

### EXAMPLE 7

A write-once type optical disc of a layered structure shown in Fig. 4 was prepared in the same manner as in Example 1. However, a target comprising an Sb-Te-Ge alloy used for the deposition of the recording layer 2 was controlled for the composition such that the composition after the deposition was Sb5Te55Ge40. The compound layer 3 was deposited by using a target comprising SnTe. Other procedures than described above were identical with those in Example 1 including the thickness of the recording layer 2 and that of the compound layer 3.

After conducting recording to the optical disc thus prepared in the same manner as in Example 1, the jitter of a readout light was measured by the same method as in Example 1. The measured value of the jitter in this optical disc was 7.61% and the jitter characteristic was favorable.

### EXAMPLE 8

A write-once type optical disc of a layered structure shown in Fig. 4 was prepared in the same manner as in Example 1. However, a target comprising an Te-Ge alloy used for the deposition of the recording layer 2 was controlled for the composition such that the composition after the deposition was Te52Ge48. The compound layer 3 was deposited by using a target comprising SnTe. Other procedures than described above were identical with those in Example 1 including the thickness of the recording layer 2 and that of the compound layer 3.

After conducting recording to the optical disc thus prepared in the same manner as in Example 1, the jitter of a readout light was measured by the same method as in Example 1. The measured value of the jitter in this optical disc was 7.32% and the jitter characteristic was favorable.

### EXAMPLE 9

A write-once type optical disc of a layered structure shown in Fig. 4 was prepared in the same manner as in Example 1. However, a target comprising an Te-Ge alloy used for the deposition of the recording layer 2 was controlled for the composition such that the composition after the deposition was Te44Ge56. The compound layer 3 was deposited by using a target comprising SnTe. Other procedures than described above were identical with those in Example 1 including the thickness of the recording layer 2 and that of the compound layer 3.

After conducting recording to the optical disc thus prepared in the same manner as in Example 1, the jitter of a readout light was measured by the same method as in Example 1. The measured value of the jitter in this optical disc was 7.23% and the jitter characteristic was favorable.

### EXAMPLE 10

A write-once type optical disc of a layered structure shown in Fig. 4 was prepared in the same manner as in Example 1. However, a target comprising an Te-Ge alloy used for the deposition of the recording layer 2 was controlled for the composition such that the composition after the deposition was Te50Ge50. The compound layer 3 was deposited by using a target comprising SnTe. Other procedures than described above were identical with those in Example 1 including the thickness of the recording layer 2 and that of the compound layer 3.

After conducting recording to the optical disc thus prepared in the same manner as in Example 1, the jitter of a readout light was measured by the same method as in Example 1. The measured value of the jitter in this optical disc was 7.15% and the jitter characteristic was favorable.

### EXAMPLE 11

A write-once type optical disc of a layered structure shown in Fig. 4 was prepared in the same manner as in Example 1. However, the compound layer 3 was deposited by using a target comprising Bi2Te3. Other procedures than described above were identical with those in Example 1 including the thickness of the compound layer 3.

After conducting recording to the optical disc thus prepared in the same manner as in Example 1, the jitter of a readout light was measured by the same method as in Example 1. The measured value of the jitter in this optical disc was 8.27 % and the jitter characteristic was favorable.

### EXAMPLE 12

A write-once type optical disc of a layered structure shown in Fig. 4 was prepared in the same manner as in Example 1. However, a target comprising an Sb-Te-Ge alloy used for the deposition of the recording layer 2 was controlled for the composition such that the composition after the deposition was Sb10Te50Ge40. The compound layer 3 was deposited by using a target comprising Bi2Te3. Other procedures than described above were identical those in Example 1 including the thickness of the recording layer 2 and that of the compound layer 3.

After conducting recording to the optical disc thus prepared in the same manner as in Example 1, the jitter of a readout light was measured by the same method as in Example 1. The measured value of the jitter in this optical disc was 8.63% and the jitter characteristic was favorable.

### EXAMPLE 13

A write-once type optical disc of a layered structure shown in Fig. 4 was prepared in the same manner as in Example 1. However, a target comprising an Sb-Te-Ge alloy used for the deposition of the recording layer 2 was controlled for the composition such that the composition after the deposition was Sb27Te53Ge20. The compound layer 3 was deposited by using a target comprising Bi2Te3. Other procedures than described above were identical with those in Example 1 including the thickness of the recording layer 2 and that of the compound layer 3.

After conducting recording to the optical disc thus prepared in the same manner as in Example 1, the jitter of a readout light was measured by the same method as in Example 1. The measured value of the jitter in this optical disc was 8.38% and the jitter characteristic was favorable.

### EXAMPLE 14

A write-once type optical disc of a layered structure shown in Fig. 4 was prepared in the same manner as in Example 1. However, a target and used for the deposition of the recording layer 2 comprised an Te-Ge alloy was controlled for the composition such that the composition after the deposition was Te50Ge50. The compound layer 3 was deposited by using a target comprising Bi2Te3. Other procedures than described above were identical with those in Example 1 including the thickness of the recording layer 2 and that of the compound layer 3.

After conducting recording to the optical disc thus prepared in the same manner as in Example 1, the jitter of a readout light was measured by the same method as in Example 1. The measured value of the jitter in this optical disc was 8.66% and the jitter characteristic was favorable.

### EXAMPLE 15

A write-once type optical disc of a layered structure shown in Fig. 4 was prepared in the same manner as in Example 1. However, the compound layer 3 was deposited by using a target comprising Sb2Te3. Other procedures than above were identical with those in Example 1 including the thickness of the compound layer 3.

After conducting recording to the optical disc thus prepared in the same manner as in Example 1, the jitter of a readout light was measured by the same method as in Example 1. The measured value of the jitter in this optical disc was 8.41% and the jitter characteristic was favorable.

### EXAMPLE 16

A write-once type optical disc of a layered structure shown in Fig. 4 was prepared in the same manner as in Example 1. However, a target used for the deposition of the recording layer 2 comprised an Te-Ge alloy and was controlled for the composition such that the composition after the deposition was Te50Ge50. The compound layer 3 was deposited by using a target comprising SnTe. The thickness of the compound layer was set to 15 nm. Other procedures than described above were identical with those in Example 1 including the thickness of the recording layer 2.

After conducting recording to the optical disc thus prepared in the same manner as in Example 1, the jitter of a readout light was measured by the same method as in Example 1. The measured value of the jitter in this optical disc was 8.70% and the jitter characteristic was favorable.

### EXAMPLE 17

A write-once type optical disc of a layered structure shown in Fig. 4 was prepared in the same manner as in Example 1. However, the compound layer 3 was deposited by using a target comprising Sb2Te3. The thickness of the compound layer 3 was set to 3 nm. the thickness of the reflection layer 4 was set to 120 nm. Other procedures than above were identical with those in Example 1.

After conducting recording to the optical disc thus prepared in the same manner as in Example 1, the jitter of a readout light was measured by the same method as in Example 1. The measured value of the jitter in this optical disc was 8.83% and the jitter characteristic was favorable.

### COMPARATIVE EXAMPLE 1

A write-once type optical disc of a layered structure shown in Fig. 4 was prepared in the same manner as in Example 1. However, a target comprising an Sb-Te-Ge alloy used for the deposition of the recording layer 2 was controlled for the composition such that the composition after the deposition was Sb40Te40Ge20. This composition is out of the range of the present invention. Other procedures than described above were identical with those in Example 1 including the thickness of the recording layer 2.

After conducting recording to the thus prepared optical disc by the same method as in Example 1, the jitter of a readout light was tried to measure by the same method as in Example 1. However, since crystallization upon recording was insufficient in this optical disc, the jitter could not be measured.

### COMPARATIVE EXAMPLE 2

A write-once type optical disc of a layered structure shown in Fig. 4 was prepared in the same manner as in Example 1. However, a target comprising an Sb-Te-Ge alloy used for the deposition of the recording layer 2 was controlled for the composition such that the composition after the deposition was Sb20Te40Ge40. This composition is out of the range of the present invention. Other procedures than described above were identical with those in Example 1 including the thickness of the recording layer 2.

After conducting recording to the thus prepared optical disc by the same method as in Example 1, the jitter of a readout light was tried to measure by the same method as in Example 1. However, since crystallization upon recording was insufficient in this optical disc, the jitter could not be measured.

### COMPARATIVE EXAMPLE 3

A write-once type optical disc of a layered structure shown in Fig. 4 was prepared in the same manner as in Example 1. However, a layer comprising Sb of 40 nm thickness was deposited instead of the compound layer 3 on the recording layer 2 and a protection layer comprising ZnS-SiO2 of 20 nm thickness was deposited thereon. A synthetic resin layer 5 was deposited on the protection layer without deposition of the reflection layer 4. Other procedures than above were identical with those in Example 1.

After conducting recording to the thus prepared optical disc by the same method as in Example 1, the jitter of a readout light was measured in the same manner as in Example 1. In the optical disc, the measured value of the jitter was 12.53%, which was as high as by about 4% compared with each of the examples described above and the jitter characteristic was poor.

### COMPARATIVE EXAMPLE 4

A write-once type optical disc of a layered structure shown in Fig. 4 was prepared in the same manner as in Example 1. However, a target comprising an Sb-Te-Ge alloy used for the deposition of the recording layer 2 was controlled for the composition such that the composition after the deposition was Sb40Te40Ge20. This composition is out of the range of the present invention. The compound layer 3 was deposited by using a target comprising Bi2Te3. Other procedures than described above were identical with those in Example 1 including the thickness of the recording layer 2 and that of the compound layer 3.

After conducting recording to the thus prepared optical disc by the same method as in Example 1, the jitter of a readout light was tried to measure by the same method as in Example 1. However, since crystallization upon recording was insufficient in this optical disc, the jitter could not be measured.

### COMPARATIVE EXAMPLE 5

A write-once type optical disc of a layered structure shown in Fig. 4 was prepared in the same manner as in Example 1. However, a target comprising an Sb-Te-Ge alloy used for the deposition of the recording layer 2 was controlled for the composition such that the composition after the deposition was Sb20Te40Ge40. This composition is out of the range of the present invention. The compound layer 3 was deposited by using a target comprising Bi2Te3. Other procedures than described above were identical with those in Example 1 including the thickness of the recording layer 2 and that of the compound layer 3.

After conducting recording to the thus prepared optical disc by the same method as in Example 1, the jitter of a readout light was tried to measure by the same method as in Example 1. However, since crystallization upon recording was insufficient in this optical disc, the jitter could not be measured.

### INDUSTRIAL APPLICABILITY

As has been explained above, according to the present invention, in a write-once type optical information recording medium having a phase change type recording layer, stability of the recording mark to the reading beam is improved and the jitter characteristic is favorable in a case of conducting high density recording by mark edge recording. Thus, a write-once type optical information recording medium with less dependence on the wavelength of a recording laser beam and suitable to a case where the recording system is mark edge recording is provided.

Particularly, in a write-once type optical information recording medium having a reflection layer, control for the length of the recording mark by mark edge recording can be conducted accurately by constituting the reflection layer with a material having a heat conductivity of 50 W/m·K or higher.

## Claims

1. A write-once type optical information recording medium having, at least on one surface of a transparent substrate, a recording layer in which information is recorded by phase change from amorphousness to crystal, wherein
the recording layer comprises a Te-Ge-Sb series alloy or a Te-Ge series alloy, in which the composition thereof is within a range surrounded by four points of A (0.475, 0.05, 0.475), B (0.665, 0.05, 0.285), C (0.60, 0.40, 0) and D (0.40, 0.60, 0) in a triangular diagram showing the composition of three ingredients of Te, Ge and Sb by an coordinate (Te, Ge, Sb), and wherein
a compound layer containing at least one compound selected from the group consisting of PbSe, PbTe, SnSe, SnTe, Bi₂Te₃ and Sb₂Te₃ as the main ingredient is disposed just above or just below the recording layer.

2. A write-once type optical information recording medium as defined in claim 1, wherein the recording layer comprises a Te-Ge-Sb series alloy or a Te-Ge series alloy in which the composition thereof is within a range surrounded by four points of J (0.47, 0.40, 0.13), K (0.55, 0.40, 0.05), L (0.52, 0.48, 0) and M (0.44, 0.56, 0) in a triangular diagram showing the composition of three ingredients of Te, Ge and Sb by an coordinate (Te, Ge, Sb).

3. A write-once type optical information recording medium having, at least on one surface of a transparent substrate, a recording layer in which information is recorded by phase change from amorphousness to crystal and a reflection layer for reflecting light transmitted through the recording layer, wherein
the recording layer comprises a Te-Ge-Sb series alloy or a Te-Ge series alloy, in which the composition thereof is within a range surrounded by four points of A (0.475, 0.05, 0.475), B (0.665, 0.05, 0.285), C (0.60, 0.40, 0) and D (0.40, 0.60, 0) in a triangular diagram showing the composition of three ingredients of Te, Ge and Sb by an coordinate (Te, Ge, Sb), and wherein
a compound layer containing at least one compound selected from the group consisting of PbSe, PbTe, SnSe, SnTe, Bi₂Te₃ and Sb₂Te₃ as the main ingredient is disposed just above or just below the recording layer, and
the reflection layer comprises a material having a heat conductivity of 50 W/m·K or higher.

4. A write-once type optical information recording medium as defined in claim 3, wherein the recording layer comprises a Te-Ge-Sb series alloy or a Te-Ge series alloy in which the composition thereof is within a range surrounded by four points of J (0.47, 0.40, 0.13), K (0.55, 0.40, 0.05), L (0.52, 0.48, 0) and M (0.44, 0.56, 0) in a triangular diagram showing the composition of three ingredients of Te, Ge and Sb by an coordinate (Te, Ge, Sb).

5. A write-once type optical information recording medium as defined in claim 3, wherein the reflection layer comprises a metal selected from the group consisting of Al, Cr, Ni, Au, Hf, Pd, Ta, Co, Mo, W and Ti, or an alloy of such metals.

6. A write-once type optical information recording medium as defined in any one of claims 1 to 5, wherein the thickness of the compound layer is 2 nm or more and less than 20 nm.

7. A write-once type optical information recording medium as defined in any one of claims 1 to 5, wherein the thickness of the compound layer is 2 nm or more and less than 10 nm.
